# EUROPEAN PATENT APPLICATION

(11) **EP 2 571 014 A1**
(43) Date of publication of application: **20.03.2013**
(21) Application number: 11780535.8
(22) Date of filing: 28.04.2011
(51) Int. Cl.: G09G 3/36, G09G 3/20, H04N 13/04

(54) **IMAGE PROCESSING METHOD, IMAGE PROCESSING DEVICE, IMAGE PROCESSING CIRCUIT AND IMAGE DISPLAY DEVICE**

(30) Priority: 14.05.2010 JP 2010112495
(71) Applicant: Sony Corporation, Tokyo 180-0075 (JP)
(72) Inventor: ODA, Kyoichiro, Tokyo 108-0075 (JP); KATAGAWA, Koichi, Tokyo 108-0075 (JP); TAKAHASHI, Masayuki, Tokyo 108-0075 (JP); ITO, Atsushi, Tokyo 108-0075 (JP); NAKAHAMA, Masahiko, Tokyo 108-0075 (JP)
(74) Representative: Jackson, Jonathan Andrew
(86) International application number: PCT/JP2011/060442
(87) International publication number: WO 2011/142278

(57) **Abstract**

Provided are an image processing method, an image processing device, an image processing circuit, and an image display unit that allow occurrence of a crosstalk to be reduced. When an image signal Din is input, the image signal Din is converted into an image signal D'in with a narrower dynamic range based on a lookup table (53A) on a dynamic range control section (51). At this time, the dynamic range of the image signal D'in is set up to an extent of avoiding saturation in an overdrive correction. Subsequently, an image signal Dout is generated by performing the overdrive correction for the image signal D'in using the lookup table (53A) on an overdrive control section (52).

## Description

### TECHNICAL FIELD

The present invention relates to an image processing method, an image processing device, and an image processing circuit that are suitably applicable to a three-dimensional display (stereoscopic display) by the use of shutter glasses. Further, the present invention also relates to an image display unit that includes the above-described image processing device.

### BACKGROUND ART

A time-division method using shutter glasses is known as one of three-dimensional display methods. In this method, a left-eye image and a right-eye image with parallax components different from one another are alternately displayed while being switched at high speed, and a left-eye image is visually recognized with the left eye via shutter glasses, while a right-eye image is visually recognized with the right eye via shutter glasses (see Patent Document 1). As a result, a viewer feels as if images would be displayed in three dimensions.

### [PRIOR ART DOCUMENT]

### [PATENT DOCUMENT]

Patent Document 1: Japanese Unexamined Patent Application Publication No. 2010-62767

### SUMMARY OF THE INVENTION

When the above-described time-division method is applied to a liquid crystal display unit, and a left-eye image and a right-eye image are alternately displayed, a crosstalk may occur wherein a left-eye image is mixed with an image to be visually recognized with the right eye, or a right-eye image is mixed with an image to be visually recognized with the left eye. This crosstalk occurs when transmission through shutter glasses is switched from the right eye to the left eye before display is changed from a right-eye image to a left-eye image, or when transmission through shutter glasses is switched from the left eye to the right eye before the display is changed from a left-eye image to a right-eye image. Consequently, this crosstalk occurs prominently especially when a liquid crystal exhibits slower response at reduced room temperature. If this crosstalk occurs, images with parallax components different from one another are mixed with each other, and thus it is likely that a stereoscopic effect will be degraded or lost.

The present invention has been made in view of such problem, and it is an object of the present invention to provide an image processing method, an image processing device, an image processing circuit, and an image display unit that allow occurrence of the crosstalk to be reduced.

An image processing method of the present invention is an image processing method in a display unit that is provided with a display panel in which a plurality of pixels are arranged in a matrix pattern and that displays images by applying, to the plurality of pixels, a signal voltage in accordance with a right-eye image signal and a signal voltage in accordance with a left-eye image signal alternately for each single frame or each of a plurality of frames. This image processing method includes the following two steps:
(A1) A dynamic range control step of converting a dynamic range of an image signal, and
(A2) An overdrive control step of setting up, in each of the pixels, an overdrive correction value that exceeds a target pixel value of a next frame, in accordance with a difference in pixel values between frames of a converted image signal.

An image processing device of the present invention outputs an image signal in accordance with a right-eye image signal and an image signal in accordance with a left-eye image signal alternately for each single frame or each of a plurality of frames. This image processing device includes the following two elements:
(B1) A dynamic range control section that converts a dynamic range of an image signal, and
(B2) An overdrive control section that sets up, in each pixel, an overdrive correction value that exceeds a target pixel value of a next frame, in accordance with a difference in pixel values between frames of a converted image signal.

An image processing circuit of the present invention outputs an image signal in accordance with a right-eye image signal and an image signal in accordance with a left-eye image signal alternately for each single frame or each of a plurality of frames. This image processing circuit includes the following two elements:
(C1) A dynamic range control section that converts a dynamic range of an image signal, and
(C2) An overdrive control section that sets up, in each pixel, an overdrive correction value that exceeds a target pixel value of a next frame, in accordance with a difference in pixel values between frames of a converted image signal.

An image display unit of the present invention includes: a display panel in which a plurality of pixels are arranged in a matrix pattern; and a driving circuit that applies a signal voltage to the plurality of pixels. The driving circuit includes the image processing device described above.

In the image processing method, the image processing device, the image processing circuit, and the image display unit of the present invention, an overdrive correction is performed after converting the dynamic range of the image signal. This makes it possible to reduce the possibility of saturation in the overdrive correction value. As a result, for example, it is possible to reduce the possibility that a gray-scale level at the time when a signal voltage generated based on an output signal after the overdrive correction is applied to the display panel will not reach a gray-scale level corresponding to the image signal before the conversion of the dynamic range thereof.

In the image processing method, the image processing device, the image processing circuit, and the image display unit of the present invention, the dynamic range of the image signal may be converted using a lookup table that describes on the overdrive correction value. In such a case, when the lookup table has a dynamic range equivalent to the dynamic range of the image signal before the conversion of the dynamic range thereof, it is possible to generate an output signal using only those on the lookup table that are within the dynamic range equivalent to a dynamic range of the image signal after the conversion of the dynamic range thereof. Further, when the lookup table has a dynamic range equivalent to the dynamic range of the image signal after the conversion of the dynamic range thereof, it is possible to generate the output signal using the lookup table without providing any limitation described above.

Further, in the image processing method, the image processing device, the image processing circuit, and the image display unit of the present invention, the lookup table may be configured of a plurality of temperature-corresponding lookup tables that are set up for each predetermined temperature. In this case, it is possible to select a temperature-corresponding lookup table that corresponds to temperature information, input from outside, from among the plurality of temperature-corresponding lookup tables, and to convert the dynamic range of the image signal using the selected temperature-corresponding lookup table. Also, in the image processing method, the image processing device, the image processing circuit, and the image display unit of the present invention, a temperature-corresponding lookup table that corresponds to the temperature information input from the outside may be created using the above-described lookup table and a correction coefficient that corrects the lookup table described above. In this case, it is possible to convert the dynamic range of the image signal using the created temperature-corresponding lookup table.

According to the image processing method, the image processing device, the image processing circuit, and the image display unit of the present invention, it is possible to reduce the possibility that a gray-scale level at the time when a signal voltage generated based on the output signal after the overdrive correction is applied to the display panel will not reach a gray-scale level corresponding to the image signal before the conversion of the dynamic range thereof, which allows occurrence of the crosstalk to be reduced.

Further, in the image processing method, the image processing device, the image processing circuit, and the image display unit of the present invention, when the overdrive correction is performed using the lookup table having the dynamic range equivalent to the dynamic range of the image signal before the conversion of the dynamic range thereof, the output signal is generated by using only those on the lookup table that are within the dynamic range equivalent to the dynamic range of the image signal after the conversion of the dynamic range thereof, thereby allowing to eliminate the possibility oft saturation in the overdrive correction value. This also allows occurrence of the crosstalk to be completely eliminated.

Additionally, in the image processing method, the image processing device, the image processing circuit, and the image display unit of the present invention, when the lookup table has the dynamic range equivalent to the dynamic range of the image signal after the conversion of the dynamic range thereof, it is possible to eliminate the possibility of saturation in the overdrive correction value only by generating the output signal using the lookup table without providing any limitation described above. This also allows occurrence of the crosstalk to be completely eliminated.

Moreover, in the image processing method, the image processing device, the image processing circuit, and the image display unit of the present invention, when the overdrive correction is performed using the temperature-corresponding lookup table that is set up for each predetermined temperature, it is possible to eliminate the possibility of saturation in the overdrive correction value even under an environment of reduced pixel response speed. This allows occurrence of the crosstalk to be completely eliminated. Also, in the image processing method, the image processing device, the image processing circuit, and the image display unit of the present invention, when the overdrive correction is performed using the temperature-corresponding lookup table that is created by the use of the correction coefficient as well, it is also possible to eliminate the possibility of saturation in the overdrive correction value even under the environment of reduced pixel response speed. This also allows occurrence of the crosstalk to be completely eliminated.

### BRIEF DESCRIPTION OF THE DRAWINGS

[FIG.1] FIG. 1 is a simplified configuration diagram of a stereoscopic display system according to an embodiment of the present invention.
[FIG. 2] FIG. 2 is a functional block diagram of a stereoscopic display unit illustrated in FIG. 1.
[FIG. 3] FIG. 3 is a simplified configuration diagram of a pixel illustrated in FIG. 2.
[FIG. 4] FIG. 4 is a simplified configuration diagram of an X-driver illustrated in FIG. 2.
[FIG. 5] FIG. 5 is a diagram showing an example of a lockup table illustrated in FIG. 4.
[FIG. 6] FIG. 6 is a diagram showing an example of input/output for a dynamic range control section illustrated in FIG. 4.
[FIG. 7] FIG. 7 is a schematic diagram showing an example of how a dynamic range varies in the dynamic range control section and an overdrive control section illustrated in FIG. 4.

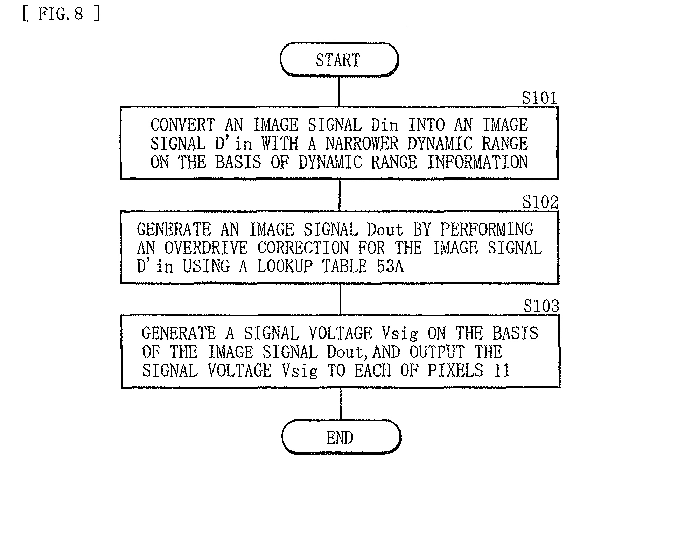

[FIG. 8] FIG. 8 is a flow chart for explaining an operation example of the X-driver illustrated in FIG. 3.
[FIG. 9] FIG. 9 is a schematic diagram showing an example of how a Y-driver performs a scan and shutter glasses turn on/off.
[FIG. 10] FIG. 10 is a diagram showing an example of how an overdrive correction is performed.
[FIG. 11] FIG. 11 is a schematic diagram showing another example of how the Y-driver performs a scan and the shutter glasses turn on/off.
[FIG. 12] FIG. 12 is a diagram showing another example of how the overdrive correction is performed.

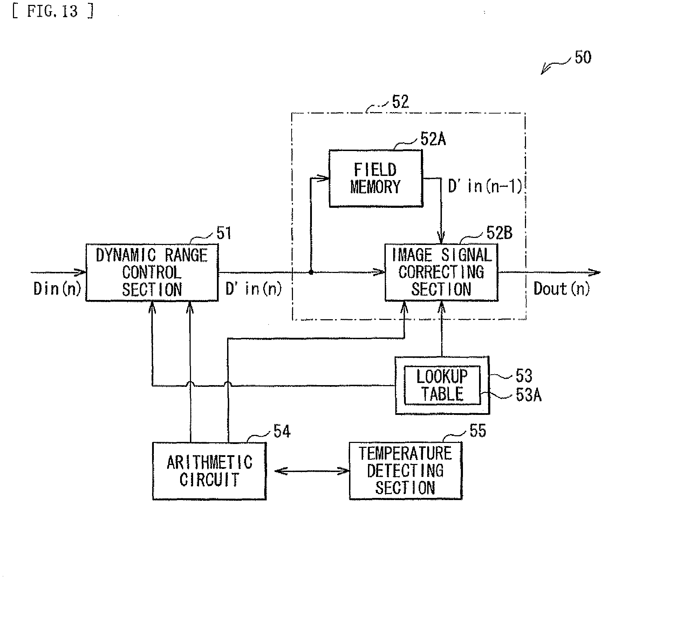

[FIG. 13] FIG. 13 is a simplified configuration diagram of a modification example for the X-driver illustrated in FIG. 4.
[FIG. 14] FIG. 14 is a diagram showing an example of a temperature-corresponding lookup table included in the lookup table illustrated in FIG. 13.

### MODES FOR CARRYING OUT THE INVENTION

Hereinafter, an embodiment of the present invention are described in details with reference to the drawings. It is to be noted that the descriptions are provided in the order given below.

### 1. Embodiment

### 2. Modification example

### <Embodiment>

### [Simplified Configuration]

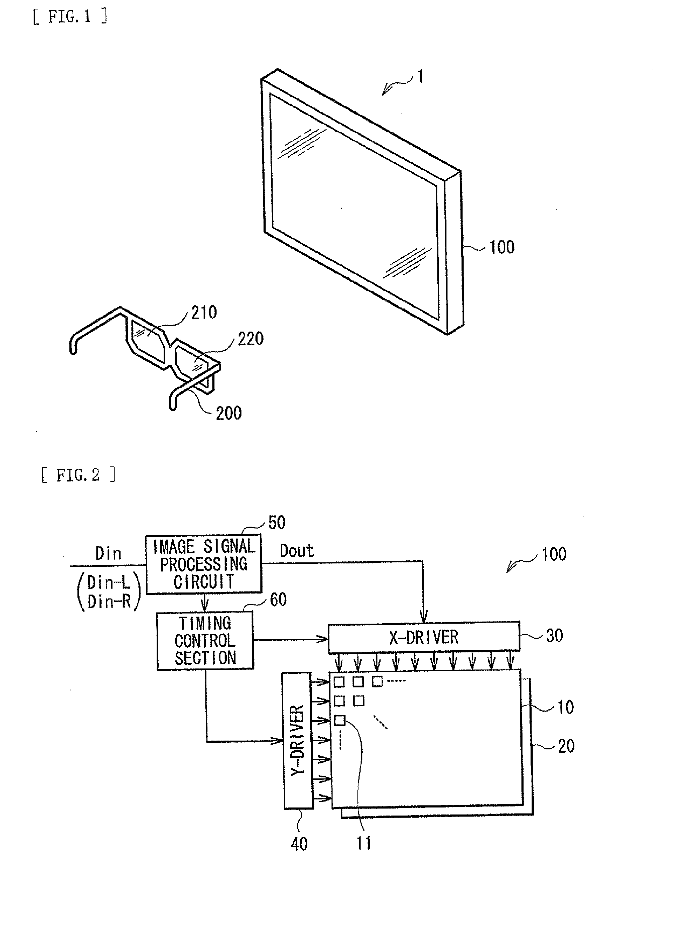

FIG. 1 shows an example of an overall configuration of a stereoscopic display system 1. As shown in FIG. 1, the stereoscopic display system 1 includes a stereoscopic display unit 100 according to an embodiment of the present invention, and shutter glasses 200, for example. It is to be noted that the stereoscopic display unit 100 corresponds to a specific example of an "image display unit" of the present invention. The stereoscopic display system 1 is a display system based on a time-division system using shutter glasses. In concrete terms, the stereoscopic display system 1 displays a left-eye image and a right-eye image with parallax components different from one another on a screen of the stereoscopic display unit 100 while alternately switching those images at high speed, with a left-eye image visually recognized with the left eye via the shutter glasses 200, and with a right-eye image visually recognized with the right eye via the shutter glasses 200, thereby making a viewer (not shown in the figure) feel as if images would be displayed in three dimensions.

As shown in FIG. 2, the stereoscopic display unit 100 includes a liquid crystal display panel 10, a backlight 20, an X-driver 30, a Y-driver 40, an image signal processing circuit 50, and a timing control section 60, for example. A driving circuit, which is composed of the X-driver 30, the Y-driver 40, the image signal processing circuit 50, and the timing control section 60, displays an image on the liquid crystal display panel 10 by applying a signal voltage in accordance with a right-eye image signal Din and a signal voltage in accordance with a left-eye image signal Din to a plurality of pixels 11 (to be hereinafter described) within the liquid crystal display panel 10 alternately for each single frame or each of a plurality of frames. Further, the stereoscopic display unit 100 also includes a communication device (for example, RF (Radio Frequency) transmitter, not shown in the figure) that performs communication with the shutter glasses 200.

It is to be noted that the liquid crystal display panel 10 corresponds to a specific example of a "display panel" of the present invention. Further, the X-driver 30, the Y-driver 40, the image signal processing circuit 50, and the timing control section 60 correspond to a specific example of a "driving circuit" of the present invention. Hereinafter, the description is provided in the order of the shutter glasses 200, the communication device, the liquid crystal display panel 10, the backlight 20, the X-driver 30, the Y-driver 40, the image signal processing circuit 50, and the timing control section 60.

### (Shutter Glasses 200)

As shown in FIG. 1, the shutter glasses 200 has a left-shutter 210 at a portion corresponding to a left-eye lens, and has a right-shutter 220 at a portion corresponding to a right-eye lens, for example. The shutter glasses 200 receive radio waves transmitted from the communication device, and open/close the left-shutter 210 and the right-shutter 220 alternately on the basis of control information included in the radio waves. The shutter glasses 200 open/close the left-shutter 210 and the right-shutter 220 in synchronization with a vertical synchronization signal of an image.

When opening/closing of the left-shutter 210 and the right-shutter 220 is carried out more than a couple dozens times per second for example, a viewer feels as if he/she would view an image with both eyes because of the effect of a residual image. As a result, two images with parallax components different from one another are imaged before the image display face, which allows a viewer to feel as if an image would be displayed in three dimensions.

### (Communication Device)

The communication device transmits control information (for example, information such as a vertical synchronization signal indicating a delimiter of a frame or field, and opening/closing timing information of the shutter glasses 200) to the shutter glasses 200 via radio waves. It is to be noted that the communication device may be built into the stereoscopic display unit 100, or may be provided separately from the stereoscopic display unit 100.

### (Liquid Crystal Display Panel 10)

As shown in FIG. 2, on the liquid crystal display panel 10, a plurality of pixels 11 are formed in a matrix pattern over a whole area of an image display face (not shown in the figure) of the liquid crystal display panel 10, for example. The liquid crystal display panel 10 displays an image based on an image signal Din that is input from outside by active-driving each of the pixels 11 through the X-driver 30 and the Y-driver 40. The above-described image signal Din, which is a digital signal representing an image to be displayed on an image display face for each of a single field, includes a digital signal corresponding to each of the pixels 11. In performing a stereoscopic display, this image signal Din becomes a signal including a left-eye image signal Din-L and a right-eye image signal Din-R alternately on a time-series basis. Further, the image signal Din also includes a vertical synchronization signal (not shown in the figure) indicating a delimiter of a frame or field. It is to be noted that the image signal Din corresponds to a specific example of a "first image signal" of the present invention.

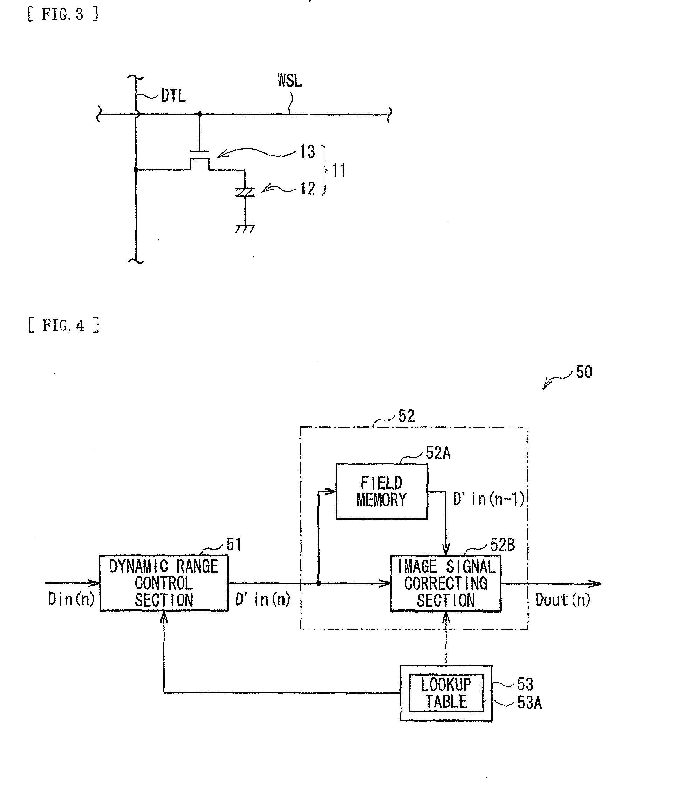

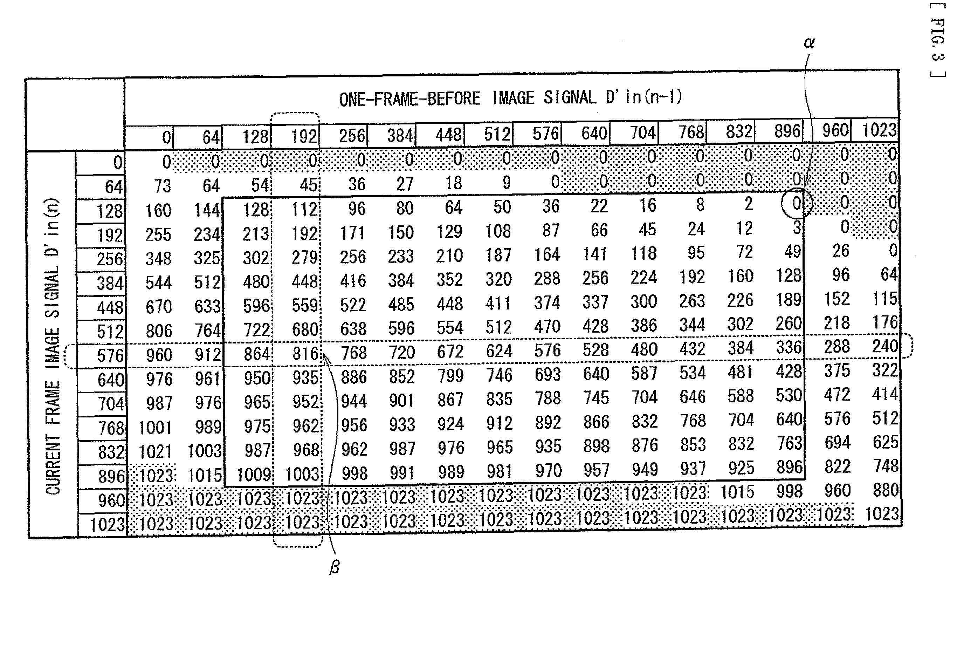

As shown in FIG. 3, each of the pixels 11 is configured to include a liquid crystal element 12 and a TFT (Thin-Film Transistor) 13, for example. The liquid crystal element 12 modulates a polarization axis of light incoming into the liquid crystal element 12 by changing an alignment state depending on a voltage applied from the X-driver 30 and the Y-driver 40. The liquid crystal element 12 is configured to include, for example, VA (Vertical Alignment) mode liquid crystal molecules. This allows each of the pixels 11 to be active-driven by the X-driver 30 and the Y-driver 40.

### (Backlight 20)

The backlight 20 is a light source that irradiates light to the liquid crystal display panel 10, being configured to include, for example, a CCFL (Cold Cathode Fluorescent Lamp), an LED (Light Emitting Diode), and the like.

### (X-Driver 30)

The X-driver 30 provides a signal voltage Vsig based on an image signal Dout for a single line that is supplied from the image signal processing circuit 50 to each of the pixels 11 on the liquid crystal display panel 10. The X-driver 30 generates the signal voltage Vsig in a form of an analog signal by performing D/A conversion of the image signal Dout for a single line, outputting the resulting voltage signal to each of the pixels 11 via a signal line DTL (see FIG. 3).

### (Y-Driver 40)

The Y-driver 40 line-sequentially drives each of the pixels 11 within the liquid crystal display panel 10 along a scanning line WSL (see FIG. 3) in accordance with a timing control performed by the timing control section 60.

### (Image Signal Processing Circuit 50)

The image signal processing circuit 50 performs a predetermined signal processing for the image signal Din that is input from outside, while outputting the image signal Dout, for which the predetermined signal processing is completed, to the X-driver 30. As is the case with the image signal Din, the above-described image signal Dout includes a digital signal corresponding to each of the pixels 11. It is to be noted that the predetermined signal processing on the image signal processing circuit 50 is hereinafter described in details.

### (Timing Control Section 60)

The timing control section 60 controls the X-driver 30, the Y-driver 40, and the shutter glasses 200 to operate in conjunction with each other. For example, the timing control section 60 outputs a control signal to the X-driver 30, the Y-driver 40, and the communication device in accordance with (in synchronization with) a synchronization signal that is input from the image signal processing circuit 50.

Next, the description is provided on an internal configuration of the image signal processing circuit 50. FIG. 4 shows the image signal processing circuit 50 on each functional block basis. As shown in FIG. 4, the image signal processing circuit 50 includes a dynamic range control section 51, an overdrive control section 52, and a memory section 53, for example.

### (Dynamic Range Control Section 51)

The dynamic range control section 51 extends a margin of a dynamic range of an image signal in performing an overdrive processing on the downstream overdrive control section 52. The dynamic range control section 51 converts a dynamic range of the image signal Din, and more specifically, converts the image signal Din into an image signal D'in with a dynamic range narrower than the dynamic range of the image signal Din. It is preferable that the dynamic range control section 51 set up the dynamic range of the image signal D'in to the extent of avoiding saturation in an overdrive correction value on the downstream overdrive control section 52. It is to be noted that the image signal D'in corresponds to a specific example of a "converted image signal" of the present invention.

Here, the dynamic range means a range from a lower limit to an upper limit of bits assigned as the image signal. For example, when 10 bits are assigned as the image signal Din, a lower limit of the image signal Din becomes 0 equivalent to a lower limit of 10 bits, while an upper limit of the image signal Din becomes 1023 equivalent to an upper limit of 10 bits, resulting in the dynamic range of the image signal Din being 0 to 1023 in this case. Further, narrowing of the dynamic range means to narrow a range from a lower limit to an upper limit of assigned bits. An example of methods for narrowing the dynamic range includes a method to make a lower limit of assigned bits greater than a value assignable as a lower limit (for example, 0), or a method to make an upper limit of assigned bits smaller than a value assignable as an upper limit (for example, 1023 in 10 bits). Further, another example of methods for narrowing the dynamic range includes a method to make a lower limit of assigned bits greater than a value assignable as a lower limit, while making an upper limit of assigned bits smaller than a value assignable as an upper limit. Hereinafter, the description is provided by taking as an example the case where a method for modifying both of a lower limit and an upper limit of assigned bits is adopted from among three methods as described above. It is to be noted that the description given below is applicable to any methods as described above.

The dynamic range control section 51 converts the image signal Din into the image signal D'in using dynamic range information (not shown in the figure) for example. Here, the dynamic range information is information on a dynamic range to be referred to in setting up the dynamic range of the image signal D'in, and an example thereof includes a lookup table 53A that describes on the overdrive correction values. The lookup table 53A, which is prestored on the above-described memory section 53, is composed of, for example, numeric data in X-Y matrix as shown in FIG. 5.

In the lookup table 53A, for example, several numeric values including a lower limit and an upper limit among values assignable as the image signal Din are allocated as coordinates at both axes of X axis and Y axis of the X-Y matrix. It is to be noted that, in the lookup table 53A, all the numeric values assignable as the image signal Din may be allocated as coordinates at both axes of X axis and Y axis. Further, the coordinates of the lookup table 53A may be described on the lookup table 53A itself, or may be omitted. In the latter case, however, it is necessary that the side which refers to the lookup table 53A (for example, dynamic range control section 51) know the coordinates of the lookup table 53A.

In the coordinates at both axes of X axis and Y axis of the lookup table 53A, a range from a lower limit to an upper limit corresponds to the dynamic range of the image signal Din. In other words, the lookup table 53A has a dynamic range equivalent to the dynamic range of the image signal Din. Further, for example, in the coordinates at both axes of X axis and Y axis within a heavy-line frame depicted in the lookup table 53A in FIG. 5, a range from a lower limit to an upper limit corresponds to the dynamic range of the image signal D'in. It is to be noted that a heavy-line frame in FIG. 5 is conceptual, and the heavy-line frame itself is not provided on the lookup table 53A. However, a flag (not shown in the figure) corresponding to the heavy-line frame may be provided to be attached on the lookup table 53A.

The lookup table 53A is used in performing the overdrive correction on the overdrive control section 52, and individual overdrive correction values themselves (in particular, any values other than the upper limit and lower limit) within the lookup table 53A are not essential information in the dynamic range control section 51. However, a location where the upper limit or lower limit in the overdrive correction values is described on the lookup table 53A includes a location where the overdrive amount runs short, and the overdrive correction values are saturated. In other words, this suggests that a location where the upper limit or lower limit is described within the lookup table 53A is a location where the overdrive amount runs short, and the overdrive correction values are saturated. For example, in FIG. 5, a shaded location corresponds to a location where the overdrive correction values are saturated.

Accordingly, it is preferable that the dynamic range control section 51 set up the dynamic range of the image signal D'in within a range excluding a location where the upper limit and lower limit are described within the lookup table 53A. For example, it is preferable that the dynamic range control section 51 set up the dynamic range of the image signal D'in within a range surrounded by a heavy line in FIG. 5. In such a case, in performing the overdrive correction on the overdrive control section 52 to be hereinafter described, the possibility of saturation in the overdrive correction values is eliminated.

It is to be noted that when there exists a location where the overdrive amount does not run short (for example, a location indicated with an arrow α in FIG. 5) at a location where the upper limit or lower limit is described within the lookup table 53A, the location may be excluded from the dynamic range of the image signal D'in by considering that the overdrive amount is insufficient at this location. Further, when the above-described flag is provided to be attached on the lookup table 53A, this flag may be used to incorporate the location, where the upper limit or lower limit is described and the overdrive amount does not run short within the lookup table 53A, in the dynamic range of the image signal D'in.

Further, although not shown in the figure, in the coordinates at both axes of X axis and Y axis on the lookup table 53A, a range from a lower limit to an upper limit may correspond to the dynamic range of the image signal D'in. In other words, in this case, the lookup table 53A has a dynamic range equivalent to the dynamic range of the image signal D'in. In this case, therefore, there exists originally no location where the overdrive correction values are saturated within the lookup table 53A, and thus it is not necessary that the dynamic range control section 51 carries out any arithmetical operation such as finding of the dynamic range of the image signal D'in.

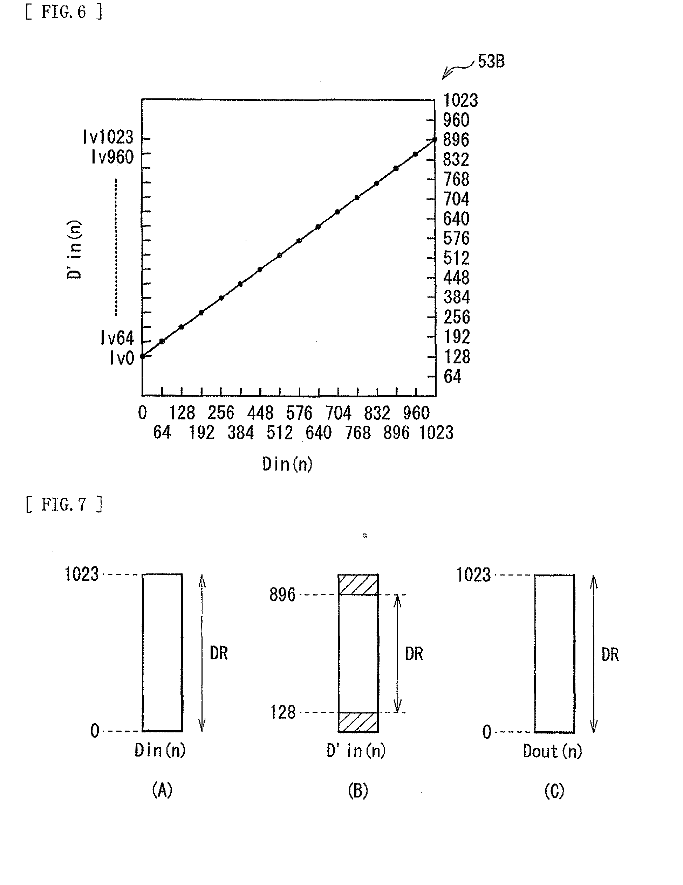

Meanwhile, the dynamic range information is not necessarily the lookup table 53A, and may be a table 53B in which a corresponding relationship for converting the image signal Din into the image signal D'in is described in advance as shown conceptually in FIG. 6 for example. Hereupon, in the table 53B, it is preferable that the dynamic range of the image signal D'in correspond to fall within a range excluding a location where the upper limit and lower limit are described within the above-described lookup table 53A. In this case, in performing the overdrive correction on the overdrive control section 52 to be hereinafter described, the possibility of saturation in the overdrive correction values is eliminated. As described above, when the table 53B as shown in FIG. 6 is used as the dynamic range information, it is not necessary that the dynamic range control section 51 carries out any arithmetical operation such as finding of the dynamic range of the image signal D'in. It is to be noted that FIG. 6 exemplifies a state where 10-bit values are formally assigned to the dynamic range of the image signal D'in.

Next, the description is provided on the overdrive control section 52. The overdrive control section 52 carries out the overdrive correction for the image signal D'in. The overdrive control section 52 sets up an overdrive correction value exceeding a target pixel value of a next frame depending on a difference in pixel values between frames of the image signal D'in in each of the pixels 11. For example, the overdrive control section 52 performs, depending on a difference in pixel values between frames, of the image signal D'in, the overdrive correction to further increase that difference (difference between frames in the image signal D'in) for the image signal D'in in each of the pixels 11, thereby generating the image signal Dout. As shown in FIG. 4, the overdrive control section 52 has a field memory 52A and an image signal correcting section 52B, for example.

The field memory 52A holds the image signal D'in incoming from the dynamic range control section 51 until the next image signal D'in is input from the dynamic range control section 51. Therefore, when an image signal D'in (n) in the inputting order n is input as the image signal D'in to the overdrive control section 52, the field memory 52A holds an image signal D'in (n-1) in the inputting order n-1 as the image signal D'in. Here, n is a positive number meaning the inputting order of the image signal D'in. Accordingly, the image signal D'in (n-1) corresponds to the one-field-previous image signal D'in in relation with the image signal D'in (n).

The image signal correcting section 52B generates the image signal Dout using the lookup table 53A. Hereupon, on the lookup table 53A, one axis of the X-Y matrix becomes coordinates of the image signal D'in (n-1), while the other axis of the X-Y matrix becomes coordinates of the image signal D'in (n). Further, numeric values within the lookup table 53A are the overdrive correction values exceeding target pixel values of the next frame. The numeric values within the lookup table 53A are, for example, numeric values for converting the numeric values of the image signal D'in (n) into numeric values to further increase a difference between frames of the image signal D'in (D'in (n) - D'in (n-1)).

The image signal correcting section 52B performs the correction to replace the numeric values of the image signal D'in (n) incoming from the dynamic range control section 51 with the numeric values at a location (for example, an arrow β in the figure) where a column of the numeric values of the image signal D'in (n-1) that is read out of the field memory 52A (for example, dotted line in the figure) and a row of the numeric values of the image signal D'in (n) incoming from the dynamic range control section 51 (for example, chain line in the figure) intersect with one another, thereby generating the image signal Dout (n).

Here, when the lookup table 53A has a dynamic range equivalent to the dynamic range of the image signal Din, the image signal correcting section 52B generates the image signal Dout (n) using only the numeric values within a dynamic range equivalent to the dynamic range of the image signal D'in on the lookup table 53A. Further, when the lookup table 53A has a dynamic range equivalent to the dynamic range of the image signal D'in, the image signal correcting section 52B generates the image signal Dout (n) using the lookup table 53A as it is without providing any limitation described above.

FIG. 7 shows schematically how the image signal varies a dynamic range DR thereof after passing through the dynamic range control section 51 and the overdrive control section 52. For the image signal Din, as shown in FIG. 7(A), all bits assigned as the image signal Din become the dynamic range DR. For the image signal D'in, as shown in FIG. 7(B) for example, a lower limit and vicinity thereof as well as an upper limit and vicinity thereof of the bits that are assigned as the image signal Din are unusable, and thus the dynamic range DR of the image signal D'in is narrower than the dynamic range DR of the image signal Din. For the image signal Dout (n), as shown in FIG. 7(C) for example, all bits assigned as the image signal Din become the dynamic range DR, and thus the dynamic range DR of the image signal Dout (n) is equivalent to the dynamic range DR of the image signal Din.

### [Operation]

Next, the description is provided on an operation in the stereoscopic display unit 100 according to the present embodiment.

First, when the image signal Din is input into the image signal processing circuit 50, the dynamic range control section 51 converts a dynamic range of the image signal Din in accordance with the dynamic range information (such as, for example, lookup table 53A and table 53B). For example, the dynamic range control section 51 converts the image signal Din into the image signal D'in with a narrower dynamic range (step S101). At this time, it is preferable to set up the dynamic range of the image signal D'in to an extent of avoiding saturation in the overdrive correction values. Next, the overdrive control section 52 performs the overdrive correction for the image signal D'in using the lookup table 53A, thereby generating the image signal Dout (step S102). Subsequently, when the image signal Dout is input into the X-driver 30, the X-driver 30 generates a signal voltage Vsig on the basis of the image signal Dout and provides this output to each of the pixels 11 (step S103).

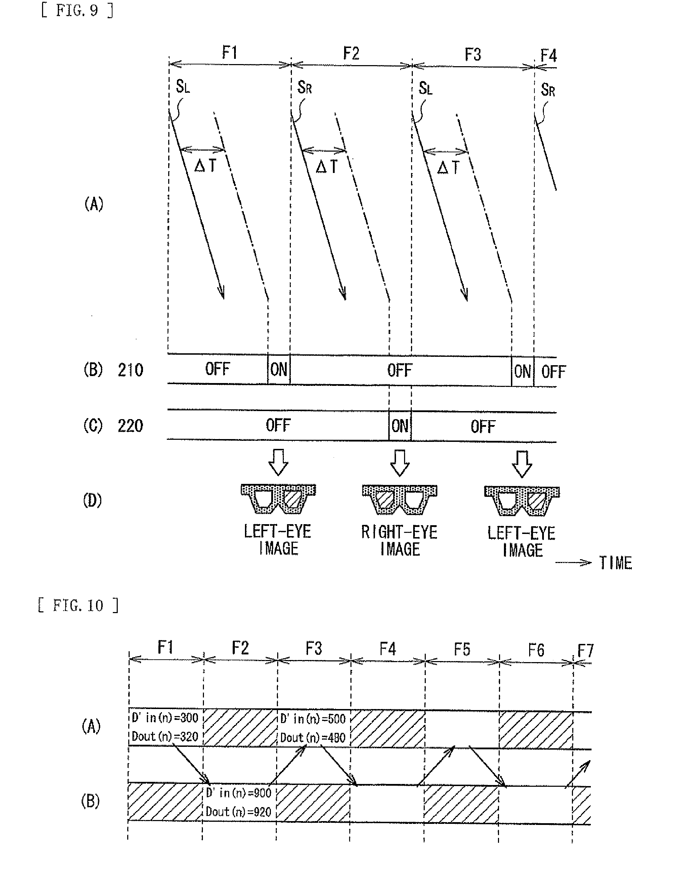

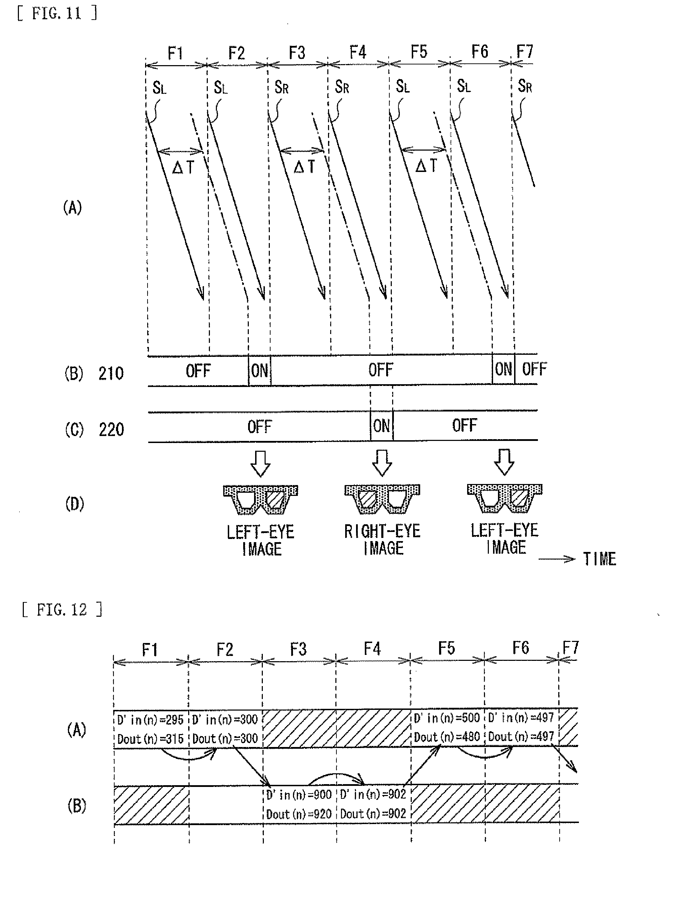

The image signal processing circuit 50 outputs the signal voltage Vsig in accordance with the right-eye image signal Din or the signal voltage Vsig in accordance with the left-eye image signal Din to each of the pixels 11 in the unit of a single frame or a plurality of frames by performing the above-described operation in the unit of a single frame or a plurality of frames. At this time, the Y-driver 40 scans the whole of a single frame repeatedly as shown schematically with arrows S_{L} and S_{R} in FIG. 9(A) and FIG. 11 (A) for example. It is to be noted that the arrows S_{L} indicates a scanning when the image signal processing circuit 50 is outputting the signal voltage Vsig in accordance with the left-eye image signal Din to each of the pixels 11, while the arrows S_{R} indicates a scanning when the image signal processing circuit 50 is outputting the signal voltage Vsig in accordance with the right-eye image signal Din to each of the pixels 11. Further, ΔT in FIG. 9(A) and FIG. 11 (A) corresponds to a response time of the liquid crystal element 12 when the Y-driver 40 scans the whole of a single frame repeatedly as shown schematically with arrows S_{L} and S_{R}. In other words, when ΔT elapses since scanning of the Y-driver 40, the response of the liquid crystal element 12 is completed, and a left-eye image or a right-eye image with desired gray-scale is displayed on the liquid crystal display panel 10.

Further, the image signal processing circuit 50 applies the signal voltage Vsig in accordance with the right-eye image signal Din and the signal voltage Vsig in accordance with the left-eye image signal Din alternately for each single frame or each of a plurality of frames to each of the pixels 11 within the liquid crystal display panel 10, while the left shutter 210 and the right shutter 220 open/close in synchronization with scanning of the Y-driver 40 (in synchronization with a vertical synchronization signal of an image) (FIG. 9(B), 9(C), and FIG. 11 (B), 11(C)). As a result, as shown in FIG. 9(D) and FIG. 11(D) for example, when the left shutter 210 is open, a left-eye image is transmitted through the left shutter 210 with a right-eye image shut off by the right shutter 220. Further, as shown in FIG. 9(D) and FIG. 11(D) for example, when the right shutter 220 is open, a right-eye image is transmitted through the right shutter 220 with a left-eye image shut off by the left shutter 210. Consequently, a right-eye image is visually recognized with the right eye of a viewer, while a left-eye image is visually recognized with the left eye of a viewer, in the unit of a single frame or a plurality of frames, which allows a viewer to feel as if images would be displayed in three dimensions.

### [Effects]

Meanwhile, in this embodiment, when the image signal processing circuit 50 applies the signal voltage Vsig in accordance with the right-eye image signal Din and the signal voltage Vsig in accordance with the left-eye image signal Din alternately for each single frame to each of the pixels 11 within the liquid crystal display panel 10, a difference in pixel values between frames of the image signal D'in is a difference in pixel values between the right-eye image signal D'in (n-1) and the left-eye image signal Din (n), or a difference in pixel values between the left-eye image signal D'in (n-1) and the right-eye image signal Din (n) as shown in FIG. 10 for example. Further, in this embodiment, when the image signal processing circuit 50 applies the signal voltage Vsig in accordance with the right-eye image signal Din and the signal voltage Vsig in accordance with the left-eye image signal Din alternately for each of a plurality of frames to each of the pixels 11 within the liquid crystal display panel 10, a difference in pixel values between frames of the image signal D'in may be sometimes a difference in pixel values between the right-eye image signal D'in (n-1) and the left-eye image signal Din (n), or a difference in pixel values between the left-eye image signal D'in (n-1) and the right-eye image signal Din (n) as shown in FIG. 12 for example.

The difference as described above tends to become greater than a difference in pixel values between the right-eye image signal D'in (n-1) and the right-eye image signal Din (n) or a difference in pixel values between the left-eye image signal D'in (n-1) and the left-eye image signal Din (n). Therefore, in the event of saturation in the overdrive correction values, a right-eye image with a desired gray-scale level may not be displayed, or a left-eye image with a desired gray-scale level may not be displayed. As a result, this leads to occurrence of the crosstalk.

In this embodiment, however, the overdrive correction is carried out after a dynamic range of the image signal Din is once narrowed down. This makes it possible to reduce the possibility of saturation in the overdrive correction values. Consequently, for example, it is possible to reduce the possibility that a gray-scale level at the time when the signal voltage Vsig generated based on the image signal Dout after the overdrive correction is applied to each of the pixels 11 will not reach a gray-scale level corresponding to the image signal Din. As a result, this allows occurrence of the crosstalk to be reduced.

Further, in this embodiment, when the overdrive correction is performed using the lookup table 53A having a dynamic range equivalent to the dynamic range of the image signal Din, the image signal Dout is generated by using only those on the lookup table 53A within a dynamic range equivalent to the dynamic range of the image signal D'in, thereby allowing to eliminate the possibility of saturation in the overdrive correction values. This also allows occurrence of the crosstalk to be completely eliminated.

Moreover, in this embodiment, when the lookup table 53A has a dynamic range equivalent to the dynamic range of the image signal D'in, it is possible to eliminate the possibility of saturation in the overdrive correction values only by generating the image signal Dout using the lookup table 53A as it is without providing any limitation described above. This also allows occurrence of the crosstalk to be completely eliminated.

### <Modification Example>

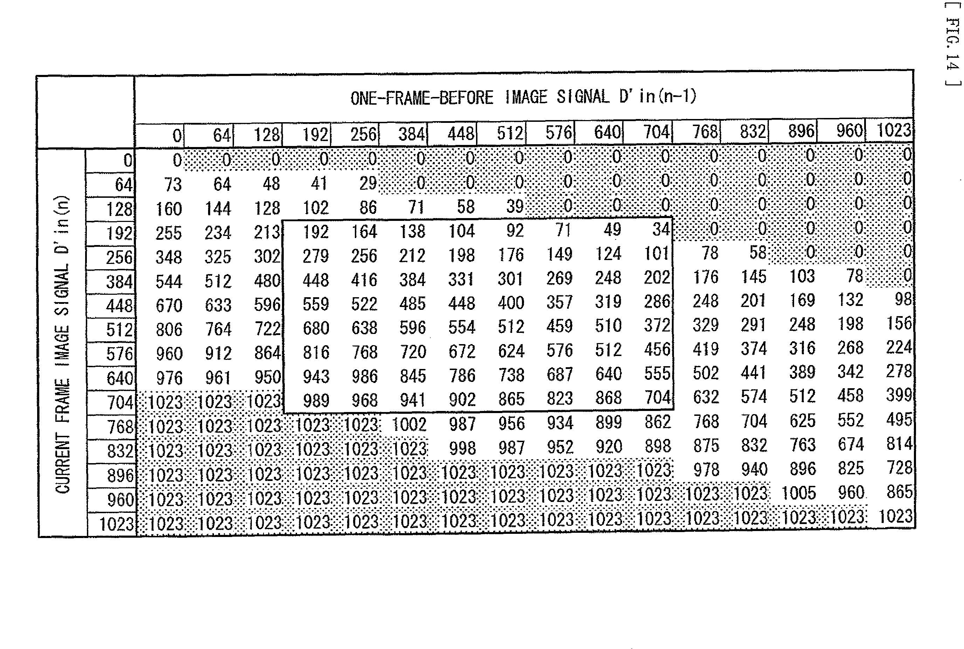

In the above-described embodiment, the dynamic range information may be information, in which the temperature of the liquid crystal display panel 10 is taken into consideration. For example, the lookup table 53A may be composed of a plurality of temperature-corresponding lookup tables that are set up for each predetermined temperature. The lookup table 53A as shown in an example in FIG. 5 becomes numeric data in the case where the temperature of the liquid crystal display panel 10 is normal temperature, while the lookup table 53A as shown in an example in FIG. 14 becomes numeric data in the case where the temperature of the liquid crystal display panel 10 is lower than normal, and such a plurality of temperature-corresponding lookup tables are stored on the memory section 53 in advance.

In this case, the dynamic range control section 51 selects the one which corresponds to the temperature of the liquid crystal display panel 10 from among the plurality of temperature-corresponding lookup tables, allowing the image signal Din to be converted into the image signal D'in using the selected temperature-corresponding lookup table.

It is to be noted that, along with the lookup table 53A as shown in FIG. 14, correction coefficients (not shown in the figure) for correcting the lookup table 53A as shown in FIG. 14 may be stored on the memory section 53, for example. In this case, the dynamic range control section 51 is allowed to create a temperature-corresponding lookup table corresponding to the liquid crystal display panel 10 using the lookup table 53A and the correction coefficients for correcting the lookup table 53A, and to convert the image signal Din into the image signal D'in using the created temperature-corresponding lookup table.

Meanwhile, in order to select the one that corresponds to the temperature of the liquid crystal display panel 10 on the dynamic range control section 51, information on the temperature of the liquid crystal display panel 10 or information for identifying a temperature-corresponding lookup table is necessary. In this modification example, therefore, it is preferable that the image signal processing circuit 50 have an arithmetic circuit 54 that outputs the information for identifying the temperature-corresponding lookup table to the dynamic range control section 51. It is preferable that, for example, the arithmetic circuit 54 obtain the information on the temperature of the liquid crystal display panel 10 from a temperature detecting section 55, that is provided within the liquid crystal display panel 10 or next to the liquid crystal display panel 10 and detects the temperature of the liquid crystal display panel 10.

In this modification example, when the overdrive correction is performed using a temperature-corresponding lookup table that is set up for each predetermined temperature, it is possible to eliminate the possibility of saturation in overdrive correction values even under an environment where the response speed of the pixels 11 is reduced. This allows occurrence of the crosstalk to be completely eliminated. Also, in this modification example, when the overdrive correction is performed using a temperature-corresponding lookup table that is created by the use of correction coefficients, it is also possible to eliminate the possibility of saturation in overdrive correction values even under the environment where the response speed of the pixels 11 is reduced. This also allows occurrence of the crosstalk to be completely eliminated.

Although the present invention is described hereto with reference to the embodiment and the modification example, the present invention is not limited thereto, but a variety of modifications are allowed to be made.

For example, in the above-described embodiment and the like, the stereoscopic display unit 100 includes the liquid crystal display panel 10, although may include a display panel using an element in which the response speed decreases depending on the external temperature instead of the liquid crystal display panel 10.

## Claims

1. An image processing method in a display unit, the display unit being provided with a display panel in which a plurality of pixels are arranged in a matrix pattern and displaying images by applying, to the plurality of pixels, a signal voltage in accordance with a right-eye image signal and a signal voltage in accordance with a left-eye image signal alternately for each single frame or each of a plurality of frames, the image processing method comprising:
a dynamic range control step of converting a dynamic range of the image signal; and
an overdrive control step of setting up, in each of the pixels, an overdrive correction value that exceeds a target pixel value of a next frame, in accordance with a difference in pixel values between frames of a converted image signal.

2. The image processing method according to claim 1, wherein the dynamic range control step converts the dynamic range of the image signal into a dynamic range narrower than the dynamic range of the image signal.

3. The image processing method according to claim 1, wherein the dynamic range control step sets up a dynamic range of the converted image signal to an extent of avoiding saturation in the overdrive correction value.

4. The image processing method according to claim 1, wherein the dynamic range control step converts the dynamic range of the image signal using a lookup table that describes on the overdrive correction value.

5. The image processing method according to claim 4, wherein
the lookup table has a dynamic range equivalent to the dynamic range of the image signal, and
the overdrive control step sets up the overdrive correction value using only those on the lookup table that are within the dynamic range equivalent to a dynamic range of the converted image signal.

6. The image processing method according to claim 4, wherein
the lookup table has a dynamic range equivalent to a dynamic range of the converted image signal, and
the overdrive control step sets up the overdrive correction value using the lookup table.

7. The image processing method according to claim 4, wherein
the lookup table is configured of a plurality of temperature-corresponding lookup tables that are set up for each predetermined temperature, and
the dynamic range control step selects a temperature-corresponding lookup table that corresponds to a temperature of the display panel from among the plurality of temperature-corresponding lookup tables, and converts the dynamic range of the image signal using the selected temperature-corresponding lookup table.

8. The image processing method according to claim 4, wherein the dynamic range control step creates a temperature-corresponding lookup table that corresponds to a temperature of the display panel using the lookup table and a correction coefficient that corrects the lookup table, and converts the dynamic range of the image signal using the created temperature-corresponding lookup table.

9. The image processing method according to claim 1, further comprising a signal voltage generation step generating the signal voltages based on the overdrive correction value.

10. An image processing device that outputs an image signal in accordance with a right-eye image signal and an image signal in accordance with a left-eye image signal alternately for each single frame or each of a plurality of frames, the image processing device comprising:
a dynamic range control section converting a dynamic range of the image signal; and
an overdrive control section setting up, in each pixel, an overdrive correction value that exceeds a target pixel value of a next frame, in accordance with a difference in pixel values between frames of a converted image signal.

11. The image processing device according to claim 10, wherein the dynamic range control section sets up a dynamic range of the converted image signal to an extent of avoiding saturation in the overdrive correction value.

12. The image processing device according to claim 10, further comprising a memory section storing dynamic range information,
wherein the dynamic range control section converts the dynamic range of the image signal using the dynamic range information.

13. The image processing device according to claim 12, wherein
the memory section stores a loolcup table that describes on the overdrive correction value, and
the dynamic range control section converts the dynamic range of the image signal using the lookup table as the dynamic range information.

14. The image processing device according to claim 13, wherein
the lookup table has a dynamic range equivalent to the dynamic range of the image signal, and
the overdrive control section sets up the overdrive correction value using only those on the lookup table that are within the dynamic range equivalent to a dynamic range of the converted image signal.

15. The image processing device according to claim 13, wherein
the lookup table has a dynamic range equivalent to a dynamic range of the converted image signal, and
the overdrive control section sets up the overdrive correction value using the lookup table.

16. The image processing device according to claim 13, wherein
the lookup table is configured of a plurality of temperature-corresponding lookup tables that are set up for each predetermined temperature, and
the dynamic range control section selects a temperature-corresponding lookup table that corresponds to temperature information, input from outside, from among the plurality of temperature-corresponding lookup tables, and converts the dynamic range of the image signal using the selected temperature-corresponding lookup table.

17. The image processing device according to claim 13, wherein
the memory section stores a correction coefficient that corrects the lookup table, and
the dynamic range control section creates a temperature-corresponding lookup table that corresponds to the temperature information, input from the outside, using the lookup table and the correction coefficient, and converts the dynamic range of the image signal using the created temperature-corresponding lookup table.

18. An image processing circuit that outputs an image signal in accordance with a right-eye image signal and an image signal in accordance with a left-eye image signal alternately for each single frame or each of a plurality of frames, the image processing circuit comprising:
a dynamic range control section converting a dynamic range of the image signal; and
an overdrive control section setting up, in each pixel, an overdrive correction value that exceeds a target pixel value of a next frame, in accordance with a difference in pixel values between frames of a converted image signal.

19. An image display unit, comprising:
a display panel in which a plurality of pixels are arranged in a matrix pattern; and
a driving circuit applying, to the plurality of pixels, a signal voltage in accordance with a right-eye image signal and an image signal in accordance with a left-eye image signal alternately for each single frame or each of a plurality of frames, wherein
the driving circuit includes
a dynamic range control section converting a dynamic range of the image signal, and
an overdrive control section setting up, in each of the pixels, an overdrive correction value that exceeds a target pixel value of a next frame, in accordance with a difference in pixel values between frames of a converted image signal.
